(19) Europäisches Patentamt
European Patent Office
Office européen des brevets

(11) Veröffentlichungsnummer: **0 129 015 B1**

(12) **EUROPÄISCHE PATENTSCHRIFT**

(45) Veröffentlichungstag der Patentschrift: **07.08.91**

(51) Int. Cl.⁵: **C01B 33/18, C01C 1/16**

(21) Anmeldenummer: **84104245.0**

(22) Anmeldetag: **14.04.84**

(54) **Pyrogen hergestelltes Siliciumdioxid, Verfahren zu seiner Herstellung und Verwendung.**

(30) Priorität: **10.06.83 DE 3320968**

(43) Veröffentlichungstag der Anmeldung:
**27.12.84 Patentblatt 84/52**

(45) Bekanntmachung des Hinweises auf die Patenterteilung:
**07.08.91 Patentblatt 91/32**

(84) Benannte Vertragsstaaten:
**BE DE FR GB IT NL**

(56) Entgegenhaltungen:
**DE-C- 1 012 901**
**GB-A- 1 197 271**

(73) Patentinhaber: **Degussa Aktiengesellschaft**
**Weissfrauenstrasse 9**
**W-6000 Frankfurt am Main 1(DE)**

(72) Erfinder: **Koth, Detlev, Dr.**
**Im Karlesberg 8**
**W-8752 Mömbris(DE)**
Erfinder: **Schutte, Dieter, Dr.**
**Ernst-Reuster-Strasse 16**
**W-7888 Rheinfelden(DE)**
Erfinder: **Schmid, Manfred**
**Waldeckstrasse 70**
**W-7842 Kandern(DE)**

## Beschreibung

Pyrogen hergestelltes Siliciumdioxid ist ein bekanntes anorganisches Produkt (vgl. DE-PS 974 793, DE-PS 974 974, DE-PS 900 339). Es wird u.a. durch Flammenhydrolyse von Siliciumtetrachlorid hergestellt.

Nachteiligerweise hat derartig hergestelltes Siliciumdioxid an der Oberfläche aus dem Herstellprozess stammenden Chlorwasserstoff adsorbiert und weist daher einen sauren pH-Wert von ca. 3 bis 5 auf.

Ein derartig saures pyrogen hergestelltes Siliciumdioxid kann nicht in säureempfindliche Systeme eingesetzt werden.

Gegenstand der Erfindung ist ein Verfahren zur Herstellung eines pyrogen hergestellten Siliciumdioxides, das einen alkalischen bzw. schwach sauren pH-Wert von 4 bis 9, vorzugsweise > 5, insbesondere 7 bis 9 aufweist, welches dadurch gekennzeichnet ist, daß man pyrogen hergestelltes Siliciumdioxid unmittelbar nach der Entsäuerung unter Ausschluß von Luftfeuchtigkeit bei Temperaturen von 300 bis 500 °C mit gasförmigem Ammoniak behandelt und das pyrogen hergestellte Siliciumdioxid der Produktionsanlage an einer Stelle entnimmt, an der es noch nicht mit Luft in Berührung gekommen ist.

Die Herstellung des pyrogen hergestellten Siliciumdioxides kann gemäß der DE-PS 900 339 unter Verwendung von Siliciumtetrachlorid als Ausgangsmaterial erfolgen. Dabei kann das pyrogen hergestellte Siliciumdioxid der Produktionsanlage an einer Stelle entnommen werden, an der es noch nicht mit Luft in Berührung gekommen ist. Wesentlich ist, daß bei dem frisch pyrogen hergestellten Siliciumdioxid noch keine Adsorption von Wasser (Luftfeuchtigkeit) an der Oberfläche stattgefunden hat, d.h., die Silanolgruppen des pyrogen hergestellten Siliciumdioxides sind noch nicht inaktiviert worden.

Die Umsetzung des pyrogen hergestellten Siliciumdioxides mit gasförmigem Ammoniak kann auf bekannte Weise in einem Fließbett bei Temperaturen von 300 bis 500 °C kontinuierlich erfolgen. Die pH-Wert-Einstellung kann stufenlos durch die zugegebene Menge an Ammoniak erfolgen. Ebenso kann die Umsetzung des pyrogen hergestellten Siliciumdioxides mit gasförmigem Ammoniak durch Zugabe des Ammoniak in den Produktstrom im direkten Anschluß an die Herstellung des pyrogen hergestellten Siliciumdioxides erfolgen.

Das erfindungsgemäße pyrogen hergestellte Siliciumdioxid kann auf Grund seines alkalischen bzw. schwach sauren pH-Wertes in säureempfindlichen Systemen, wie z.B. Azidtabletten für Airbag, als Additiv eingesetzt werden. Es kann auch als Füllstoff, Verdickungs-, Thixotropierungsmittel oder Fließhilfsmittel eingesetzt werden.

Beispiele

Im direkten Anschluß an den Produktionsprozeß wird Siliciumdioxid, welches pyrogen aus Siliciumtetrachlorid gemäß DE-PS 900 339 hergestellt wurde, mit gasförmigem Ammoniak behandelt.

Die ermittelten physikalisch-chemischen Daten des pyrogen hergestellten Siliciumdioxides vor und nach der Behandlung mit gasförmigem Ammoniak sind in der Tabelle 1 aufgeführt:

Tabelle 1    Nachbehandlung von pyrogen hergestelltem Siliciumdioxid

| Bsp. | NH₃-Behandlung | nicht behandeltes SiO₂ | | | | | | Behandeltes SiO₂ | | | | | |
|---|---|---|---|---|---|---|---|---|---|---|---|---|---|
| | | Menge l/h | pH | BET m²/g | Verd. mpas | Cl % | Grindo µm | pH | BET m²/g | Verd. mpas | Cl % | Grindo µm |
| 1 | NH₃ | 170 | 3,90 | 366 | 3609 | 0,0027 | 50 | 4,10 | 370 | 3510 | 0,0074 | 56 |
| 2 | " | 400 | 4,15 | 372 | 3369 | 0,0029 | 56 | 6,55 | 370 | 3384 | 0,0033 | 56 |
| 3 | " | 170 | 4,30 | 181 | 2351 | 0,0022 | 38 | 5,30 | 183 | 2271 | 0,0024 | 38 |
| 4 | " | 400 | 4,20 | 220 | 2292 | 0,0032 | 43 | 6,90 | 212 | 2203 | 0,0033 | 43 |
| 5 | " | 600 | 4,10 | 210 | 3413 | 0,0039 | 71 | 8,10 | 204 | 3409 | 0,0042 | 57 |
| 6 | " | 600 | 4,20 | 212 | 2893 | 0,0042 | 52 | 8,40 | 218 | 2781 | 0,0049 | 50 |
| 7 | " | 590 | 4,30 | 298 | 4120 | – | – | 8,05 | 298 | 3824 | – | – |
| 8 | " | 1000 | 4,35 | 297 | 4238 | – | – | 8,35 | 294 | 2902 | – | – |
| 9 | " | 1000 | 4,35 | 303 | 4138 | – | – | 8,70 | 311 | 3921 | – | – |

BET = BET-Oberfläche nach DIN 66 131

Verd. = Verdickung gemessen in ungesättigten Polyester ( 5 %iger Batch, 2 %ige Endkonzentration)

Grindo. = Grindometerwert nach DIN 52 203

**Patentansprüche**

1. Verfahren zur Herstellung eines pyrogen hergestellten Siliciumdioxides, das einen alkalischen bzw. schwach sauren pH-Wert von 4 bis 9, vorzugsweise > 5, insbesondere 7 bis 9 aufweist, dadurch

3

gekennzeichnet, daß man pyrogen hergestelltes Siliciumdioxid unmittelbar nach der Entsäuerung unter Ausschluß von Luftfeuchtigkeit bei Temperaturen von 300 bis 500 °C mit gasförmigem Ammoniak behandelt, und das pyrogen hergestellt Siliciumdioxid der Produktionsanlage an einer Stelle entnimmt, an der es noch nicht mit Luft in Berührung gekommen ist.

**Claims**

1.  A process for the production of a pyrogenic silicon dioxide having an alkaline or mildly acidic pH value in the range from 4 to 9, preferably > 5 and, more preferably, 7 to 9, characterized in that, immediately after acidification, pyrogenic silicon dioxide is treated with gaseous ammonia at temperatures in the range from 300 to 500 °C in the absence of atmospheric moisture and the pyrogenic silicon dioxide is removed from the production plant at a point at which it has still not come into contact with air.

**Revendications**

1.  Procédé de préparation d'un dioxyde de silicium pyrogéniquement préparé, qui présente un pH alcalin ou faiblement acide compris entre 4 et 9, de préférence supérieur à 5, notamment de 7 à 9, caractérisé en ce qu'on traite avec de l'ammoniac gazeux à des températures de 300 à 500 °C à l'abri de l'humidité de l'air du dioxyde de silicium pyrogéniquement préparé après desacidification, et qu'on prélève de l'unité de production de dioxyde de silicium en un endroit où il n'est pas encore entré en contact avec l'air.